# EUROPEAN PATENT APPLICATION

(11) **EP 4 174 764 A1**
(43) Date of publication of application: **03.05.2023**
(21) Application number: 21830137.2
(22) Date of filing: 15.06.2021
(51) Int. Cl.: G06T 7/00, G01N 33/48

(54) **INFORMATION PROCESSING DEVICE, INFORMATION PROCESSING METHOD, PROGRAM, AND INFORMATION PROCESSING SYSTEM**

(30) Priority: 24.06.2020 JP 2020108732
(71) Applicant: Sony Group Corporation, Minato-Ku, Tokyo, 108-0075 (JP)
(72) Inventor: SOMA, Yoshio, Tokyo 108-0075 (JP); AISAKA, Kazuki, Tokyo 108-0075 (JP)
(74) Representative: D Young & Co LLP
(86) International application number: PCT/JP2021/022634
(87) International publication number: WO 2021/261323

(57) **Abstract**

Provided is an information processing apparatus including an information acquisition section (104) that acquires information of a first region (700) specified by a filling input operation on image data (610) of a living tissue by a user, and a region determination section (108) that executes fitting on a boundary of the first region on the basis of the image data and information of the first region and determines a second region (702) to be subjected to predetermined processing.

## Description

### Field

The present disclosure relates to an information processing apparatus, an information processing method, a program, and an information processing system.

### Background

These days, the development of a technology in which a target region (for example, a lesion region) is automatically extracted from image data of a living tissue such as a cell sample and the extraction result is put to diagnosis or research use is being advanced. In the above technology, images of a plurality of known (labeled) target regions are used as teacher data to perform machine learning, and a discriminator and data (model data) for use by the discriminator are constructed by such machine learning; then, a target region can be automatically extracted from newly obtained image data by using the discriminator and the data (model data) for use by the discriminator. In the present specification, image data of known target regions used as teacher data is referred to as annotation data. There are disclosed various technologies for obtaining annotation data, and Non Patent Literature 1 below is given as an example.

### Citation List

### Non Patent Literature

Non Patent Literature 1: Jessica L. Baumann et al., "Annotation of Whole Slide Images Using Touchscreen Technology", 2018 Pathology Visions

### Summary

### Technical Problem

The annotation data described above is generated by a method in which a user draws a line on image data by using an input device (for example, a mouse, an electronic pen, or the like), thereby the range of a target region is specified, and an image of the specified range is extracted. To perform automatic extraction of a target region like that described above with good accuracy, it is required that a discriminator and model data for use by the discriminator be constructed by performing machine learning by using a large amount of annotation data that is appropriately labeled and has good accuracy.

However, the user's work of, like the above, drawing a line to specify the range of a target region present in a predetermined state while viewing image data is very troublesome work; hence, there is a limit to the generation of a large amount of highly accurate annotation data. The accuracy of the automatic extraction described above is improved when a recognizer, etc. are constructed by using a larger amount of appropriately labeled annotation data; however, there is a limit to the amount of annotation data generated, and hence there is a limit also to the improvement of the accuracy of the automatic extraction.

Thus, the present disclosure proposes an information processing apparatus, an information processing method, a program, and an information processing system capable of efficiently generating data (annotation data) to be subjected to predetermined processing (machine learning) .

### Solution to Problem

According to the present disclosure, an information processing apparatus is provided. The information processing apparatus includes: an information acquisition section that acquires information of a first region specified by a filling input operation on image data of a living tissue by a user; and a region determination section that executes fitting on a boundary of the first region on the basis of the image data and information of the first region and determines a second region to be subjected to predetermined processing.

Also, according to the present disclosure, an information processing method is provided. The information processing method includes: acquiring information of a first region specified by a filling input operation on image data of a living tissue by a user; and executing fitting on a boundary of the first region on the basis of the image data and information of the first region and determining a second region to be subjected to predetermined processing, by a processor.

Also, according to the present disclosure, a program is provided. The program causes a computer to function as: an information acquisition section that acquires information of a first region specified by a filling input operation on image data of a living tissue by a user; and a region determination section that executes fitting on a boundary of the first region on the basis of the image data and information of the first region and determines a second region to be subjected to predetermined processing.

Moreover, according to the present disclosure, an information processing system is provided. The information processing system includes an information processing apparatus, and a program for causing the information processing apparatus to execute information processing. In the information processing system, the information processing apparatus functions as: in accordance with the program, an information acquisition section that acquires information of a first region specified by a filling input operation on image data of a living tissue by a user; and a region determination section that executes fitting on a boundary of the first region on the basis of the image data and information of the first region and determines a second region to be subjected to predetermined processing.

### Brief Description of Drawings

FIG. 1 is a diagram illustrating a configuration example of an information processing system according to an embodiment of the present disclosure.
FIG. 2 is a flowchart illustrating an operation example of an information processing system according to an embodiment of the present disclosure.
FIG. 3 is an explanatory diagram describing an operation example of an information processing system according to an embodiment of the present disclosure.
FIG. 4 is an explanatory diagram (part 1) describing an operation example of an information processing apparatus according to an embodiment of the present disclosure.
FIG. 5 is an explanatory diagram (part 2) describing an operation example of an information processing apparatus according to an embodiment of the present disclosure.
FIG. 6 is a diagram illustrating a functional configuration example of an information processing apparatus according to an embodiment of the present disclosure.
FIG. 7 is a diagram illustrating a functional configuration example of a processing section illustrated in FIG. 6.
FIG. 8 is a flowchart illustrating an information processing method according to an embodiment of the present disclosure.
FIG. 9 is an explanatory diagram (part 1) of an input screen according to an embodiment of the present disclosure.
FIG. 10 is an explanatory diagram (part 2) of an input screen according to an embodiment of the present disclosure.
FIG. 11 is a sub-flowchart (part 1) of step S230 illustrated in FIG. 8.
FIG. 12 is an explanatory diagram (part 1) describing each sub-mode according to an embodiment of the present disclosure.
FIG. 13 is an explanatory diagram (part 2) describing each sub-mode according to an embodiment of the present disclosure.
FIG. 14 is an explanatory diagram (part 3) describing each sub-mode according to an embodiment of the present disclosure.
FIG. 15 is a sub-flowchart (part 2) of step S230 illustrated in FIG. 8.
FIG. 16 is an explanatory diagram (part 4) describing each sub-mode according to an embodiment of the present disclosure.
FIG. 17 is an explanatory diagram (part 5) describing each sub-mode according to an embodiment of the present disclosure.
FIG. 18 is an explanatory diagram (part 1) describing a search range according to an embodiment of the present disclosure.
FIG. 19 is an explanatory diagram (part 2) describing a search range according to an embodiment of the present disclosure.
FIG. 20 is an explanatory diagram (part 3) describing a search range according to an embodiment of the present disclosure.
FIG. 21 is an explanatory diagram (part 1) describing a modification example of an embodiment of the present disclosure.
FIG. 22 is an explanatory diagram (part 2) describing a modification example of an embodiment of the present disclosure.
FIG. 23 is an explanatory diagram (part 3) describing a modification example of an embodiment of the present disclosure.
FIG. 24 is a block diagram illustrating an example of a schematic configuration of a diagnosis support system.
FIG. 25 is a block diagram illustrating a hardware configuration example of an information processing apparatus according to an embodiment of the present disclosure.

### Description of Embodiments

Hereinbelow, preferred embodiments of the present disclosure are described in detail with reference to the accompanying drawings. In the present specification and the drawings, components having substantially the same functional configurations are denoted by the same reference numerals, and a repeated description is omitted. Further, in the present specification and the drawings, a plurality of components having substantially the same or similar functional configurations may be distinguished by attaching different alphabets after the same reference numerals. However, when it is not necessary to particularly distinguish between components having substantially the same or similar functional configurations, only the same reference numerals are attached.

The description is given in the following order.
1. With regard to overview of embodiment of present disclosure
   1.1 Background
   1.2 Overview of embodiment of present disclosure
2. Embodiments
   2.1 Functional configuration example of information processing apparatus
   2.2 Functional configuration example of processing section
   2.3 With regard to fitting processing
   2.4 Information processing method
3. Modification example
4. Conclusions
5. Application example
6. Hardware configuration
7. Supplements

### <<1. With regard to overview of embodiment of present disclosure>>

### <1.1 Background>

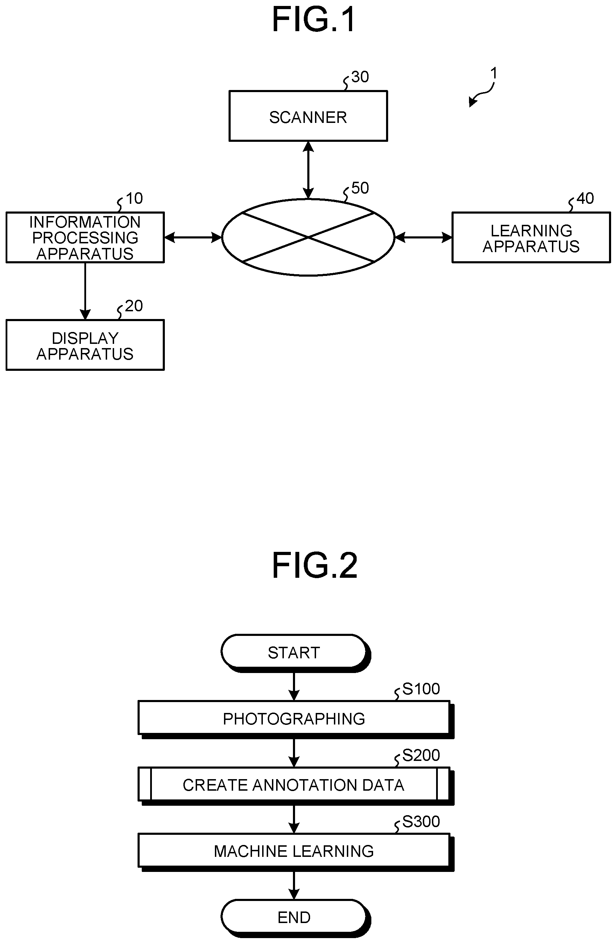

Before describing an overview of an embodiment of the present disclosure, the background leading to the creation of the embodiment of the present disclosure by the present inventors is described with reference to FIG. 1.

In the medical field, a pathologist may make a diagnosis by using a pathological image, but the diagnosis result for the same pathological image may be different between pathologists. Such variations in diagnosis are caused by, for example, experience values such as differences in career years and expertise between pathologists, and it is difficult to avoid variations in diagnosis. Thus, these days, a technology that uses machine learning to derive diagnosis support information, which is information for supporting pathological diagnosis, is developed for the purpose of supporting all pathologists so that they can make highly accurate pathological diagnoses. Specifically, in this technology, a plurality of pathological images in each of which a label (annotation) is attached to a target region to be noted (for example, a lesion region or the like) are prepared, and these pathological images are subjected to machine learning; thereby, a discriminator and data (model data) for use by the discriminator are constructed. Then, an image of a target region to be noted in a new pathological image can be automatically extracted by using a discriminator and model data for use by the discriminator constructed by such machine learning. By such a technology, information of a target region to be noted in a new pathological image can be provided to a pathologist; thus, the pathologist can make a pathological diagnosis of a pathological image more appropriately. In the present specification, data that is used as teacher data of the machine learning mentioned above and in which a label (annotation) is attached to an image of a target region (for example, a lesion region or the like) is referred to as annotation data.

The above-mentioned construction of a discriminator and model data for use by the discriminator is made mainly by three-step processing of "preparation of a pathological image", "creation of annotation data", and "machine learning" (details of the construction will be described later). Here, the label (annotation) attached to a target region (for example, a lesion region or the like) may be various pieces of information regarding the target region. For example, the information may include diagnosis results such as the subtype of "cancer", the stage of "cancer", and the degree of differentiation of cancer cells, and analysis results such as the presence or absence of a lesion in the target region, the probability that a lesion is included in the target region, the position of a lesion, and the type of a lesion. The degree of differentiation may be used to predict information such as what drug (anticancer agent or the like) is likely to work.

Next, a configuration example of an information processing system 1 according to an embodiment of the present disclosure is described. FIG. 1 is a diagram illustrating a configuration example of an information processing system 1 according to an embodiment of the present disclosure. As illustrated in FIG. 1, the information processing system 1 according to an embodiment of the present disclosure includes an information processing apparatus 10, a display apparatus 20, a scanner 30, a learning apparatus 40, and a network 50. The information processing apparatus 10, the scanner 30, and the learning apparatus 40 are configured to be able to communicate with each other via the network 50. As the communication system used in the network 50, any system may be used regardless of whether it is a wired or wireless system, but it is desirable to use a communication system capable of maintaining stable operations. Further, in the present embodiment, the information processing apparatus 10 and the display apparatus 20 may be separate apparatuses like those illustrated in FIG. 1, or may be an integrated apparatus, and are not particularly limited. Hereinbelow, an overview of each apparatus included in the information processing system 1 is described.

### (Information processing apparatus 10)

The information processing apparatus 10 is formed of, for example, a computer, and can generate annotation data used for the machine learning mentioned above and output the annotation data to the learning apparatus 40 described later. For example, the information processing apparatus 10 is used by a user (for example, a doctor, a clinical examination technician, or the like). The embodiment of the present disclosure mainly assumes that various operations by the user are inputted to the information processing apparatus 10 via a mouse (illustration omitted) or a pen tablet (illustration omitted). However, in the present embodiment, various operations by the user may be inputted to the information processing apparatus 10 via a not-illustrated terminal. Further, the present embodiment mainly assumes that various pieces of presentation information to the user are outputted from the information processing apparatus 10 via the display apparatus 20. However, in the present embodiment, various pieces of presentation information to the user may be outputted from the information processing apparatus 10 via a not-illustrated terminal. Details of the information processing apparatus 10 according to the embodiment of the present disclosure will be described later.

### (Display Apparatus 20)

The display apparatus 20 is, for example, a display apparatus of liquid crystals, EL (electro-luminescence), a CRT (cathode ray tube), or the like, and can display a pathological image by the control of the information processing apparatus 10 described above. Further, a touch panel that accepts an input from the user may be superimposed on the display apparatus 20. In the present embodiment, the display apparatus 20 may be compatible with 4K or 8K, and may be composed of a plurality of display devices; thus, is not particularly limited. The user can, while viewing a pathological image displayed on the display apparatus 20, freely specify a target region to be noted (for example, a lesion region) on the pathological image by using the mouse (illustration omitted), the pen tablet (illustration omitted), or the like mentioned above, and attach an annotation (label) to the target region.

### (Scanner 30)

The scanner 30 can perform reading on a living tissue such as a cell sample obtained from a specimen. Thereby, the scanner 30 generates a pathological image in which the living tissue is present, and outputs the pathological image to the information processing apparatus 10 described above. For example, the scanner 30 includes an image sensor, and generates a pathological image by imaging a living tissue with the image sensor. The reading system of the scanner 30 is not limited to a specific type. In the present embodiment, the reading system of the scanner 30 may be a CCD (charge-coupled device) type or a CIS (contact image sensor) type, and is not particularly limited. Here, the CCD type can correspond to a type in which light (reflected light or transmitted light) from a living tissue is read by a CCD sensor and the light read by the CCD sensor is converted into image data. On the other hand, the CIS system can correspond to a type in which an LED (light emitting diode) of three colors of RGB is used as a light source, light (reflected light or transmitted light) from a living tissue is read by a photosensor, and the reading result is converted into image data.

In the embodiment of the present disclosure, a description is given mainly assuming that a pathological image in which a lesion region is present is used as image data. However, the image data according to the embodiment of the present disclosure is not limited to a lesion image. Further, in the present embodiment, types of the pathological image may include one image obtained by connecting a plurality of images that are obtained by continuously photographing a living tissue (a slide) set on a stage of a scanner (a microscope having an image sensor). A method of thus connecting a plurality of images to generate one image is called whole slide imaging (WSI).

### (Learning apparatus 40)

The learning apparatus 40 is formed of, for example, a computer, and can construct a discriminator and model data for use by the discriminator by performing machine learning by using a plurality of pieces of annotation data. Then, an image of a target region to be noted in a new pathological image can be automatically extracted by using the discriminator and the model data for use by the discriminator constructed by the learning apparatus 40. Deep learning may be typically used for the machine learning mentioned above. The description of the embodiment of the present disclosure mainly assumes that the discriminator is obtained by using a neural network. In such a case, the model data can correspond to the weights of the neurons of the neural network. However, in the present embodiment, the discriminator may be obtained by using a means other than a neural network. In the present embodiment, for example, the discriminator may be obtained by using a random forest, may be obtained by using a support-vector machine, or may be obtained by using AdaBoost, and is not particularly limited.

Specifically, the learning apparatus 40 acquires a plurality of pieces of annotation data, and calculates a feature value of an image of a target region included in the annotation data. The feature value may be, for example, any value such as a color feature (a luminance, a saturation, a wavelength, a spectrum, or the like), a shape feature (a circularity or a circumferential length), a density, the distance from a specific form, a local feature value, or structure extraction processing (nucleus detection or the like) of a cell nucleus or a cell nucleus, or information obtained by aggregating them (a cell density, an orientation, or the like). For example, the learning apparatus 40 inputs an image of a target region to an algorithm such as a neural network, and thereby calculates a feature value of the image. Further, the learning apparatus 40 integrates feature values of images of a plurality of target regions to which the same annotation (label) is attached, and thereby calculates a representative feature value that is a feature value of the whole plurality of target regions. For example, the learning apparatus 40 calculates a representative feature value of a whole plurality of target regions on the basis of feature values such as a distribution of feature values of images of a plurality of target regions (for example, a color histogram) or an LBP (local binary pattern) focusing on texture structures of images. Then, on the basis of the calculated feature value of the target region, the discriminator can extract, from among regions included in a new pathological image, an image of another target region similar to the target region mentioned above.

The embodiment of the present disclosure mainly assumes that, as illustrated in FIG. 1, the information processing apparatus 10, the scanner 30, and the learning apparatus 40 exist as separate apparatuses. However, in the present embodiment, some or all of the information processing apparatus 10, the scanner 30, and the learning apparatus 40 may exist as an integrated apparatus. Alternatively, in the present embodiment, some of the functions of any of the information processing apparatus 10, the scanner 30, and the learning apparatus 40 may be incorporated in another apparatus.

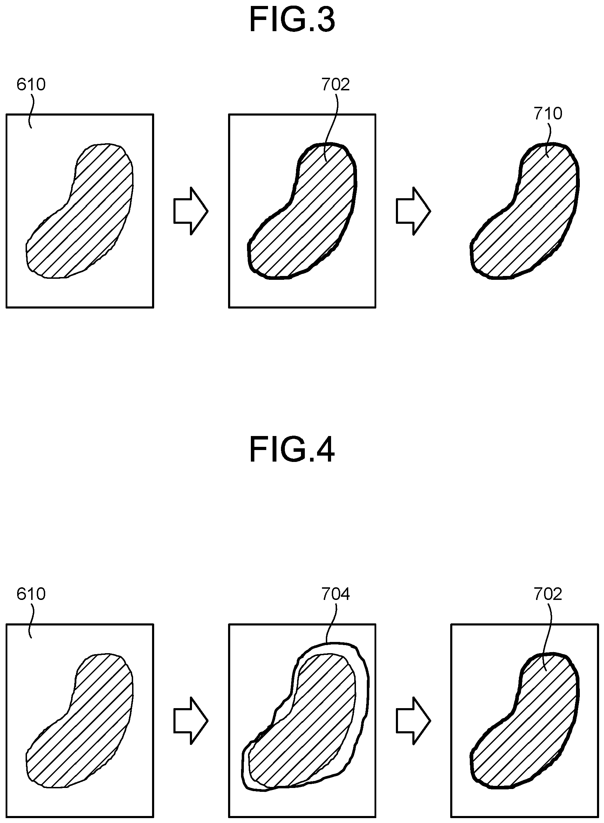

Hereinabove, a configuration example of the information processing system 1 according to an embodiment of the present disclosure is described. Next, an information processing method according to the present embodiment is described with reference to FIG. 2 and FIG. 3. FIG. 2 is a flowchart illustrating an operation example of the information processing system 1 according to an embodiment of the present disclosure, and specifically illustrates a flow in which the information processing system 1 acquires a pathological image, generates annotation data, and constructs a discriminator, etc. FIG. 3 is an explanatory diagram describing an operation example of the information processing system 1 according to an embodiment of the present disclosure.

Specifically, as illustrated in FIG. 2, an information processing method according to the present embodiment includes step S100 to step S300. Hereinbelow, each step of the information processing method according to the present embodiment is described.

The scanner 30 photographs (reads) a living tissue that is an observation target placed on a slide, generates a pathological image in which the living tissue is present, and outputs the pathological image to the information processing apparatus 10, for example (step S100). In the present embodiment, for example, the living tissue may be a tissue, a cell, a piece of an organ, saliva, blood, or the like taken from a patient.

Next, as illustrated on the left side of FIG. 3, the information processing apparatus 10 presents a pathological image 610 to the user via the display apparatus 20. While viewing the pathological image 610, the user, as illustrated in the center of FIG. 3, specifies the range of a target region to be noted (for example, a lesion region) on the pathological image 610 by using a mouse (illustration omitted) or a pen tablet (illustration omitted), and attaches an annotation (label) to the specified target region 702. Then, as illustrated on the right side of FIG. 3, the information processing apparatus 10 generates annotation data 710 on the basis of the image of the target region 702 to which an annotation is attached, and outputs the annotation data 710 to the learning apparatus 40 (step S200).

Further, the learning apparatus 40 uses a plurality of pieces of annotation data 710 to perform machine learning, and thereby constructs a discriminator and model data for use by the discriminator (step S300).

### <1.2 Outline of Embodiment of Present Disclosure>

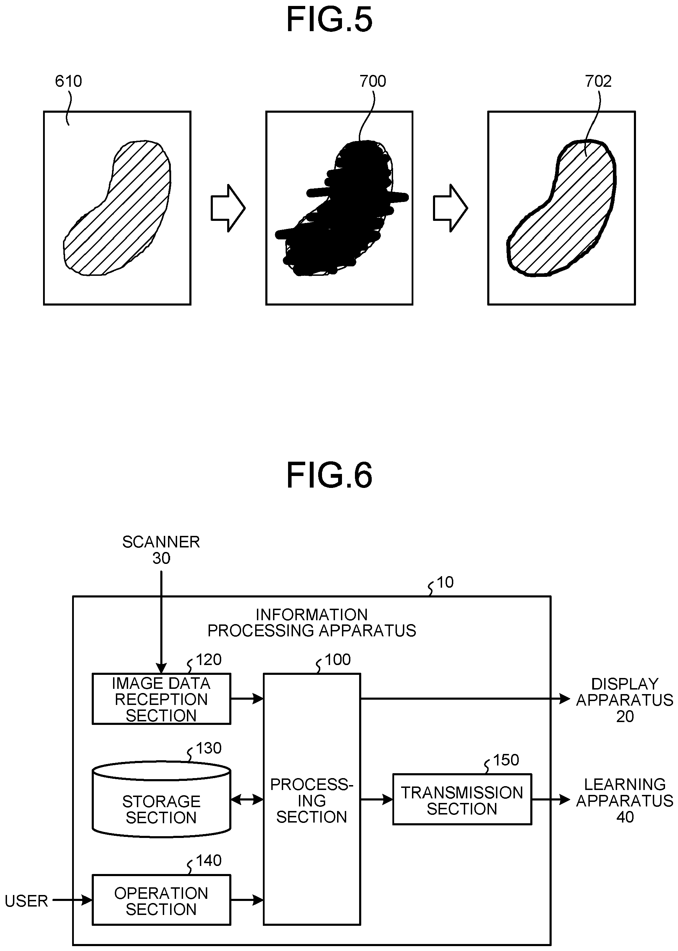

Next, an overview of an embodiment of the present disclosure is described with reference to FIG. 4 and FIG. 5. FIG. 4 and FIG. 5 are explanatory diagrams describing an operation example of the information processing apparatus 10 according to an embodiment of the present disclosure.

In a technology that uses machine learning to derive diagnosis support information, a large amount of annotation data 710 for machine learning is prepared. If a sufficient amount of annotation data 710 cannot be prepared, the accuracy of machine learning is reduced, and the accuracy of the constructed discriminator and the constructed model data for use by the discriminator is reduced; consequently, it is difficult to extract a target region to be noted (for example, a lesion region) in a new pathological image with better accuracy.

The annotation data 710 (specifically, an image included in the annotation data 710) is generated by a method in which, as illustrated in FIG. 4, the user draws a curve 704 on the pathological image 610 by using a mouse (illustration omitted) or the like, thereby a boundary indicating the range of a target region 702 is specified, and an image of the specified range is extracted. Here, the target region 702 does not mean the boundary inputted by the user alone, but means the entire region surrounded by the boundary. However, the user's work of drawing a curve 704 to specify the range of a target region 702 having a complicated outline while viewing the pathological image 610 is very troublesome work, and a deviation is likely to occur between the curve 704 drawn by the user and the actual outline of the target region 702. Thus, as illustrated in FIG. 4, a method is conceivable in which fitting processing (correction) is performed on the basis of the target region 702 of the pathological image 610 and the curve 704 drawn by the user on the pathological image 610, thereby an actual outline of the target region 702 is acquired, and an image of the target region 702 is extracted from the pathological image 610 on the basis of the acquired outline. By executing such fitting processing, even if the curve 704 drawn by the user deviates from the actual outline of the target region 702, an outline of the target region 702 can be acquired with good accuracy as intended by the user. As the technique of fitting processing applicable here, for example, "foreground/background fitting", "cell membrane fitting", "cell nucleus fitting", etc. may be given; details of these will be described later.

However, there is a case where the target region 702 has an intricately complicated shape such as a cancer cell; in such a case, the drawing of a curve 704 on the pathological image 610 by the user has difficulty in avoiding a long period of time of input work because of the long path of the curve 704. Therefore, it is difficult to efficiently generate a large amount of highly accurate annotation data 710.

Thus, in view of circumstances like the above, the present inventors have conceived an idea of specifying the range of a target region 702 by performing a filling input operation on the pathological image 610. When the target region 702 has an intricately complicated shape such as a cancer cell, the work of filling the target region 702 can reduce the user's labor as compared to the work of drawing a curve 704. Then, an actual outline of the target region 702 is acquired by fitting processing based on the boundary of the region filled by the filling input operation; thus, an image of the target region 702 can be extracted from the pathological image 610 on the basis of the acquired outline. Here, as illustrated in the center of FIG. 5, the filling input operation means an operation in which the user specifies the range of a target region 702 by means of a filled range 700 obtained by filling the target region 702 on the pathological image 610. By using such a filling input operation, a large amount of highly accurate annotation data 710 can be efficiently generated. That is, the present inventors have created an embodiment of the present disclosure by using such an idea as one point of view. Hereinbelow, details of embodiments of the present disclosure created by the present inventors are sequentially described.

In the following description, a tissue section or a cell that is a part of a tissue (for example, an organ or an epithelial tissue) acquired from a living body (for example, a human body, a plant, or the like) is referred to as a living tissue. Further, in the following description, various types are assumed as the type of the target region 702. For example, a tumor region is mainly assumed as an example of the target region 702. In addition, examples of the target region 702 include a region where there is a specimen, a tissue region, an artifact region, an epithelial tissue, a squamous epithelium, a glandular region, a cell atypical region, a tissue atypical region, and the like. That is, examples of the outline of the target region 702 include the boundary between a tumor region and a non-tumor region, the boundary between a region where there is a specimen and a region where there is no specimen, the boundary between a tissue (foreground) region and a blank (background) region, the boundary between an artifact region and a non-artifact, the boundary between an epithelial tissue and a non-epithelial tissue, the boundary between a squamous epithelium and a non-squamous epithelium, the boundary between a glandular region and a non-glandular region, the boundary between a cell atypical region and other regions, the boundary between a tissue atypical region and other regions, and the like. The fitting processing described above can be performed by using such a boundary. The living tissue described below may be subjected to various types of staining, as necessary. In other words, in the embodiments described below, unless otherwise specified, the living tissue sample may or may not be subjected to various types of staining, and is not particularly limited. Examples of staining include not only general staining typified by HE (hematoxylin-eosin) staining, Giemsa staining, or Papanicolaou staining, but also periodic acid-Schiff (PAS) staining or the like used when focusing on a specific tissue and fluorescence staining such as FISH (fluorescence in-situ hybridization) or an enzyme antibody method.

Further, in the following description, the filling input operation (filling) means an operation in which on the basis of an input operation by the user, a target region 702, which is a part of the pathological image 610, is filled with a locus having a predetermined width that is superimposed and displayed on the pathological image (image data) 610. Further, in the following description, in the case where the predetermined width mentioned above is set to less than a threshold, it is assumed that the input operation is a line-drawing input operation (stroke) in which a locus having a width of the same value as the threshold is drawn to be superimposed on the pathological image (image data) 610 by the user.

### <<2. Embodiments

### <2.1 Functional configuration example of information processing apparatus>

First, a functional configuration example of the information processing apparatus 10 according to an embodiment of the present disclosure is described with reference to FIG. 6. FIG. 6 is a diagram illustrating a functional configuration example of an information processing apparatus 10 according to an embodiment of the present disclosure. Specifically, as illustrated in FIG. 6, the information processing apparatus 10 mainly includes a processing section 100, an image data reception section 120, a storage section 130, an operation section 140, and a transmission section 150. Hereinbelow, details of the functional sections of the information processing apparatus 10 are sequentially described.

### (Processing section 100)

The processing section 100 can generate annotation data 710 from the pathological image (image data) 610 on the basis of the pathological image 610 and an input operation from the user. The processing section 100 works by, for example, a process in which a program stored in the storage section 130 described later is executed by a CPU (central processing unit) or an MPU (micro processing unit) with a RAM (random access memory) or the like as a work area. The processing section 100 may be formed of, for example, an integrated circuit such as an ASIC (application-specific integrated circuit) or an FPGA (field-programmable gate array). Details of the processing section 100 will be described later.

### (Image data reception section 120 and transmission section 150)

Each of the image data reception section 120 and the transmission section 150 includes a communication circuit. The image data reception section 120 can receive the pathological image (image data) 610 from the scanner 30 via the network 50. The image data reception section 120 outputs the received pathological image 610 to the processing section 100 described above. On the other hand, the transmission section 150 can, when annotation data 710 is outputted from the processing section 100, transmit the annotation data 710 to the learning apparatus 40 via the network 50.

### (Storage section 130)

The storage section 130 is obtained by using, for example, a semiconductor memory element such as a RAM or a flash memory, or a storage device such as a hard disk or an optical disk. The storage section 130 stores annotation data 710 already generated by the processing section 100, a program to be executed by processing section 100, etc.

### (Operation section 140)

The operation section 140 has a function of accepting an input of an operation by the user. The embodiment of the present disclosure mainly assumes that the operation section 140 includes a mouse and a keyboard. However, in the present embodiment, the operation section 140 is not limited to the case of including a mouse and a keyboard. In the present embodiment, for example, the operation section 140 may include an electronic pen, may include a touch panel, or may include an image sensor that detects a line of sight.

The above configuration described with reference to FIG. 6 is merely an example, and the configuration of the information processing apparatus 10 according to the present embodiment is not limited to such an example. That is, the configuration of the information processing apparatus 10 according to the present embodiment can be flexibly modified in accordance with specifications or practical use.

### <2.2 Functional configuration example of processing section>

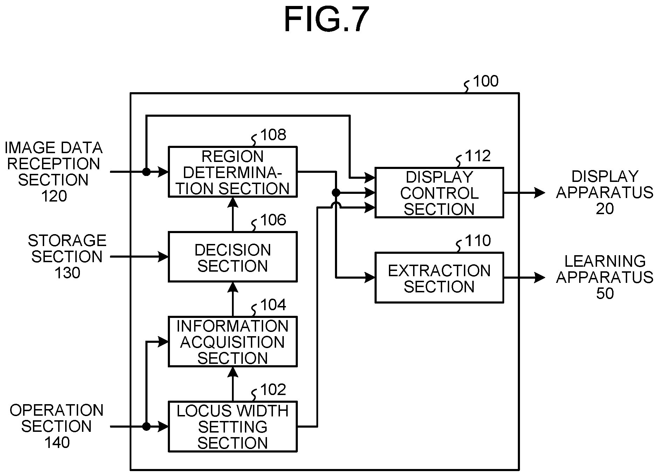

Next, a functional configuration example of the processing section 100 described above is described with reference to FIG. 7. FIG. 7 is a diagram illustrating a functional configuration example of a processing section 100 illustrated in FIG. 6. Specifically, as illustrated in FIG. 7, the processing section 100 mainly includes a locus width setting section 102, an information acquisition section 104, a decision section 106, a region determination section 108, an extraction section 110, and a display control section 112. Hereinbelow, details of the functional sections of the processing section 100 are sequentially described.

### (Locus width setting section 102)

The locus width setting section 102 can acquire information of an input by the user from the operation section 140, and set the width of the locus in the filling input operation on the basis of the acquired information. Then, the locus width setting section 102 can output information of the set width of the locus to the information acquisition section 104 and the display control section 112 described later. Details of inputting and setting of the width of the locus by the user will be described later.

In the case where the width of the locus is set to less than a threshold determined in advance, the locus width setting section 102 may switch from the filling input operation to the line-drawing input operation. That is, the locus width setting section 102 can switch between the filling input operation and the line-drawing input operation. As described above, the line-drawing input operation means an input operation in which a locus having a width of the same value as the threshold mentioned above is drawn to be superimposed on the pathological image (image data) 610 by the user.

The locus width setting section 102 may automatically set the width of the locus on the basis of a result of analysis on the pathological image 610 (for example, a result of frequency analysis on the pathological image 610, an extraction result obtained by recognizing and extracting a specific tissue from the pathological image 610, etc.) or the display magnification of the pathological image 610. Further, the locus width setting section 102 may automatically set the width of the locus on the basis of the speed at which the user draws the locus on the pathological image 610. Further, the locus width setting section 102 may automatically set the width of the locus or switch between the filling input operation and the line-drawing input operation on the basis of the input start position (the start point of the locus) of the filling input operation on the pathological image 610, for example, on the basis of the positional relationship of the input start position to a region related to existing annotation data (other image data for learning) 710 (details will be described later). In the present embodiment, by automatically performing the setting of the width of the locus or switching in this way, the convenience of the input operation can be enhanced more, and a large amount of highly accurate annotation data 710 can be efficiently generated.

### (Information acquisition section 104)

The information acquisition section 104 can acquire information of an input operation by the user from the operation section 140, and outputs the acquired information to the decision section 106 described later. Specifically, the information acquisition section 104 acquires information of a filled range (first region) 700 filled and specified by the filling input operation on the pathological image (for example, image data of a living tissue) 610 by the user. Further, the information acquisition section 104 may acquire information of a range (third region) specified by being surrounded by a curve 704 drawn by the line-drawing input operation on the pathological image 610 by the user.

### (Decision section 106)

The decision section 106 can decide whether the filled range (first region) 700 specified by the filling input operation on the pathological image 610 by the user and one or a plurality of pieces of other existing annotation data 710 already stored in the storage section 130 overlap or not. The decision section 106 can also decide in what state the filled range 700 overlaps with other existing annotation data 710 (for example, whether they overlap in a straddling manner or not), or the like. Then, the decision section 106 outputs the decision result to the region determination section 108 described later.

### (Region determination section 108)

On the basis of the pathological image (image data) 610, the filled range (first region) 700 specified by the filling input operation on the pathological image 610 by the user, and the decision result of the decision section 106 described above, the region determination section 108 performs fitting on the entire or a partial boundary line of the filled range 700 filled by the filling input operation. By this fitting processing, the region determination section 108 can acquire an entire or partial outline of the target region (second region) 702. Further, the region determination section 108 outputs information of the acquired outline of the target region 702 to the extraction section 110 and the display control section 112 described later.

Specifically, on the basis of a mode (a range setting mode) (an addition mode or a correction mode) set in advance by the user and the decision result of the decision section 106 described above, the region determination section 108 determines a fitting range on which fitting is to be executed within the boundary of the filled range (first region) 700 specified by the filling input operation. Then, the region determination section 108 executes fitting in the determined fitting range. The fitting executed here may be, for example, fitting based on the boundary between a foreground and a background, fitting based on the outline of a cell membrane, or fitting based on the outline of a cell nucleus (details of these will be described later). Which fitting technique to use may be determined in advance by the user, or may be determined in accordance with the features of the pathological image (image data) 610.

The determination of the fitting range in the present embodiment is executed in the following manner. For example, in the addition mode (a first range setting mode), in the case where the filled range (first region) 700 specified by the filling input operation and other existing annotation data (a region related to other image data for learning) 710 do not overlap, the region determination section 108 determines the fitting range in such a manner as to execute fitting on the entire boundary line of the filled range 700.

Further, for example, in the addition mode (the first range setting mode), in the case where the filled range (first region) 700 specified by the filling input operation and other existing annotation data (a region related to other image data for learning) 710 overlap, the region determination 108 section determines the fitting range within the filled range 700 so as to execute fitting on the boundary line of the region not overlapping with the other existing annotation data 710. In this case, the region related to the outline of the range on which fitting has been newly executed and the other existing annotation data 710 are integrated (joined) to become a target region (second region) 702 corresponding to an image that can be included in new annotation data 710.

Further, for example, in the correction mode (the second range setting mode), in the case where the filled range (first region) 700 specified by the filling input operation and other existing annotation data (a region related to other image data for learning) 710 overlap, the region determination section 108 determines the fitting range within the filled range 700 so as to execute fitting on the boundary line of the region overlapping with the other existing annotation data 710. In this case, the information processing apparatus 10 removes, from the other existing annotation data 710, the region related to the outline of the range on which fitting has been newly executed, and thereby become a target region (second region) 702 corresponding to an image that can be included in new annotation data 710.

Further, on the basis of the pathological image 610 and information of a range (third region) specified by the line-drawing input operation on the pathological image 610 by the user, the region determination section 108 may execute fitting on the boundary line of the range (third region) specified by the line-drawing input operation, and determine a target region (second region) 702 corresponding to an image that can be included in new annotation data 710.

### (Extraction section 110)

On the basis of a target region 702 (second region) that is determined by the region determination section 108 and that corresponds to an image that can be included in new annotation data 710, the extraction section 110 can extract an image of the target region 702 used for machine learning from the pathological image (image data) 610. Then, the extraction section 110 outputs the extracted image together with an annotation attached by the user to the learning apparatus 40 as new annotation data 710.

### (Display control section 112)

The display control section 112 can control the displaying of the display apparatus 20 on the basis of various pieces of information. For example, the display control section 112 can set the magnification of the pathological image 610 displayed on the display apparatus 20 on the basis of an input operation by the user. The display control section 112 may automatically set the magnification of the displayed pathological image 610 on the basis of a result of analysis on the pathological image 610 (for example, a result of frequency analysis on the pathological image 610, an extraction result obtained by recognizing and extracting a specific tissue from the pathological image 610, etc.) or the speed at which the user draws the locus on the pathological image 610. In the present embodiment, by automatically setting the magnification in this way, the convenience of the input operation can be enhanced more, and a large amount of highly accurate annotation data 710 can be efficiently generated.

The above configuration described with reference to FIG. 7 is merely an example, and the configuration of the processing section 100 according to the present embodiment is not limited to such an example. That is, the configuration of the processing section 100 according to the present embodiment can be flexibly modified in accordance with specifications or practical use.

### <2.3 With regard to fitting processing>

As described above, the region determination section 108 executes fitting processing in the determined fitting range. The fitting processing executed here may be, for example, "foreground/background fitting", "cell membrane fitting", "cell nucleus fitting", etc. described above.

The "foreground/background fitting" is fitting processing on the boundary between a foreground and a background. The "foreground/background fitting" can be applied when the target region 702 is, for example, a region where there is a specimen, a tissue region, an artifact region, an epithelial tissue, a squamous epithelium, a glandular region, a cell atypical region, a tissue atypical region, or the like. In this case, fitting processing can be performed on the basis of the pathological image 610 and a filled range (first region) 700 specified by the filling input operation by using a segmentation algorithm based on graph cuts. Machine learning may be used for the segmentation algorithm.

Specifically, in the "foreground/background fitting" processing, for example, a set of pixels having color values the same as or approximate to the color values of pixels that are present in a range on the pathological image 610 specified with a curve 704 by the user is taken as a target region 702 to be extracted (made into a segment), and an outline of the target region 702 is acquired. At this time, on the image, parts of a region forming a foreground object and a region forming a background object are specified in advance. Then, on the assumption that there are differences in color value among pixels of a region adjacent to the foreground object and the background object, a cost function in which the smallest cost is achieved when a foreground label or a background label is appropriately attached to all the pixels may be given, and a combination of labels whereby the cost is minimized may be calculated (graph cuts) (the energy minimization problem may be solved); thus, segmentation can be made.

The "cell membrane fitting" is fitting processing on a cell membrane. In this case, features of a cell membrane are recognized from a pathological image, and fitting processing is performed along the outline of the cell membrane on the basis of the recognized features of the cell membrane and a range surrounded by a curve 704 drawn by the user. For example, at the time of the fitting, an edge dyed brown by membrane staining of immunostaining may be used. The staining conditions are not limited to the above example, and may be any staining condition, such as general staining, immunostaining, or fluorescence immunostaining.

The "cell nucleus fitting" is fitting on a cell nucleus. In this case, features of a cell nucleus are recognized from a pathological image, and fitting is performed along the outline of the cell nucleus on the basis of the recognized features of the cell nucleus and a range surrounded by a curve 704 drawn by the user. For example, when hematoxylin-eosin (HE) is used, the nucleus is dyed blue; thus, staining information based on hematoxylin-eosin (HE) can be used at the time of the fitting. The staining conditions are not limited to the above example, and may be any staining condition, such as general staining, immunostaining, or fluorescence immunostaining.

In the following, fitting processing according to the present embodiment is specifically described assuming that "foreground/background fitting" is executed.

On the basis of information of a filled range (first region) 700 specified by the filling input operation on the pathological image 610 by the user, the region determination section 108 acquires a boundary line (outline) of the filled range 700. Then, the region determination section 108 can perform fitting by, on the basis of the pathological image 610 and the boundary line of the filled range 700, extracting an outline of a target region (second region) 702 (a region where there is a specimen, a tissue region, an artifact region, an epithelial tissue, a squamous epithelium, a glandular region, a cell atypical region, a tissue atypical region, or the like) by using a segmentation algorithm based on graph cuts. Alternatively, machine learning may be used for the segmentation algorithm. In the fitting mentioned above, the outline of the target region 702 may be determined such that the certainty (reliability) as an outline is higher. In the present embodiment, by executing such fitting processing, even if the boundary line of the filled range 700 filled by the user deviates from the actual outline of the target region 702, an outline of the target region 702 can be acquired with good accuracy as intended by the user. Thus, according to the present embodiment, a large amount of highly accurate annotation data 710 can be efficiently generated.

The search for an outline at the time of fitting processing is performed in a range extending (having a predetermined width) up to a predetermined distance from the boundary line of the filled range (first region) 700 specified by the filling input operation. In the following, the range in which an outline is searched for at the time of fitting processing is referred to as a "search range"; for example, a range extending a predetermined distance along the direction normal to the boundary line of the filled range 700 specified by the filling input operation may be taken as the search range. More specifically, in the present embodiment, the search range mentioned above may be a range located outside and inside the boundary line of the filled range 700 and extending predetermined distances along the normal direction from the boundary line. Alternatively, in the present embodiment, the search range mentioned above may be a range located outside or inside the boundary line of the filled range 700 and extending a predetermined distance along the normal direction from the boundary line; thus, is not particularly limited (details will be described later).

In the present embodiment, the predetermined distance(s) (predetermined width(s)) in the search range mentioned above may be set in advance by the user. Alternatively, in the present embodiment, the predetermined distance(s) (predetermined width(s)) in the search range may be automatically set on the basis of a result of analysis on the pathological image 610 (for example, a result of frequency analysis on the pathological image 610, an extraction result obtained by recognizing and extracting a specific tissue from the pathological image 610, etc.), the speed at which the user draws the locus on the pathological image 610, or the like. In the present embodiment, by automatically setting the search range in this way, the convenience of the user can be enhanced more, and a large amount of highly accurate annotation data 710 can be efficiently generated. Further, in the present embodiment, the information processing apparatus 10 may display the search range mentioned above to the user via the display apparatus 20.

Further, in the present embodiment, when a target region 702 as intended by the user cannot be acquired by the fitting processing mentioned above, correction may be repeatedly made by the user.

### <2.4 Information processing method>

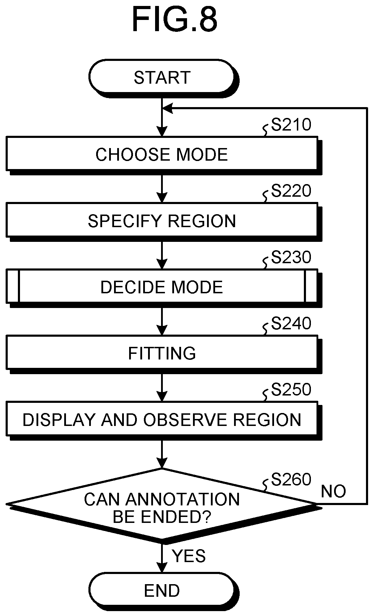

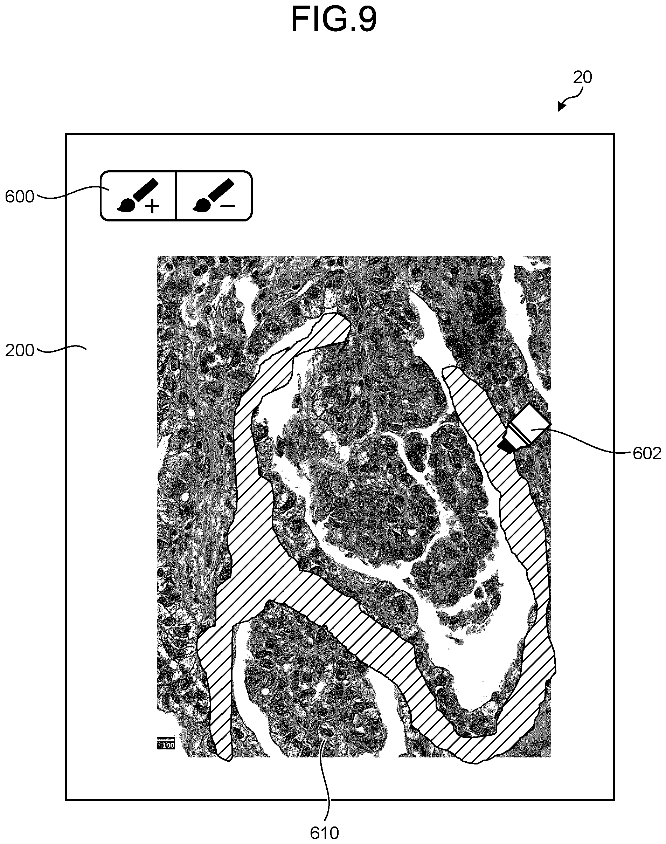

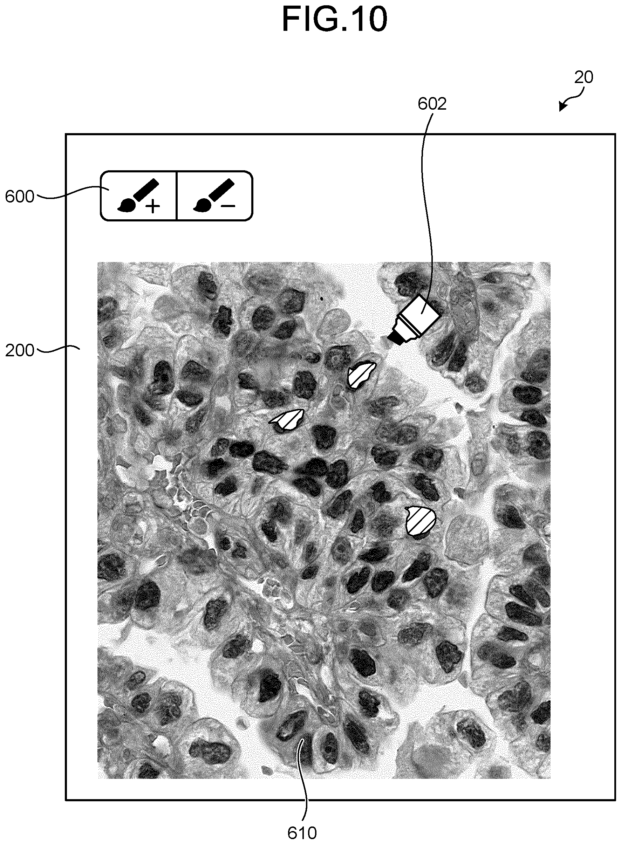

Hereinabove, details of the information processing apparatus 10, the processing section 100, and fitting according to the present embodiment are described. Next, details of a method for creating annotation data 710 (step S200 illustrated in FIG. 2) in an information processing method according to the present embodiment are described with reference to FIG. 8 to FIG. 20. FIG. 8 is a flowchart illustrating an information processing method according to the present embodiment, and FIG. 9 and FIG. 10 are explanatory diagrams of an input screen according to the present embodiment.

Specifically, as illustrated in FIG. 8, a method for creating annotation data 710 in an information processing method according to the present embodiment includes step S210 to step S260. Details of these steps will now be described.

First, when the pathological image 610 is read by the scanner 30, the information processing apparatus 10 acquires data of the pathological image 610, and presents the data to the user via the display apparatus 20. Then, the information processing apparatus 10 acquires information of a mode (a range setting mode) (an addition mode or a correction mode) chosen by the user, and sets the mode to either the addition mode or the correction mode (step S210). For example, as illustrated in FIG. 9 and FIG. 10, the user can choose the mode by performing an operation of pushing down either of two icons 600 displayed on the upper left of a display section 200 of the display apparatus 20.

Next, the user performs the filling input operation on a target region 702 of the pathological image 610, and the information processing apparatus 10 acquires information of a filled range (first region) 700 specified by the filling input operation by the user (step S220). For example, as illustrated in FIG. 9 and FIG. 10, the user can perform the filling input operation by performing an operation of moving an icon 602 on the pathological image 610 displayed on the display section 200 of the display apparatus 20.

Then, the information processing apparatus 10 decides a sub-mode for determining the fitting range on the basis of the mode (the range setting mode) (the addition mode or the correction mode) set in advance by the user and the decision result of the decision section 106 described above (step S230).

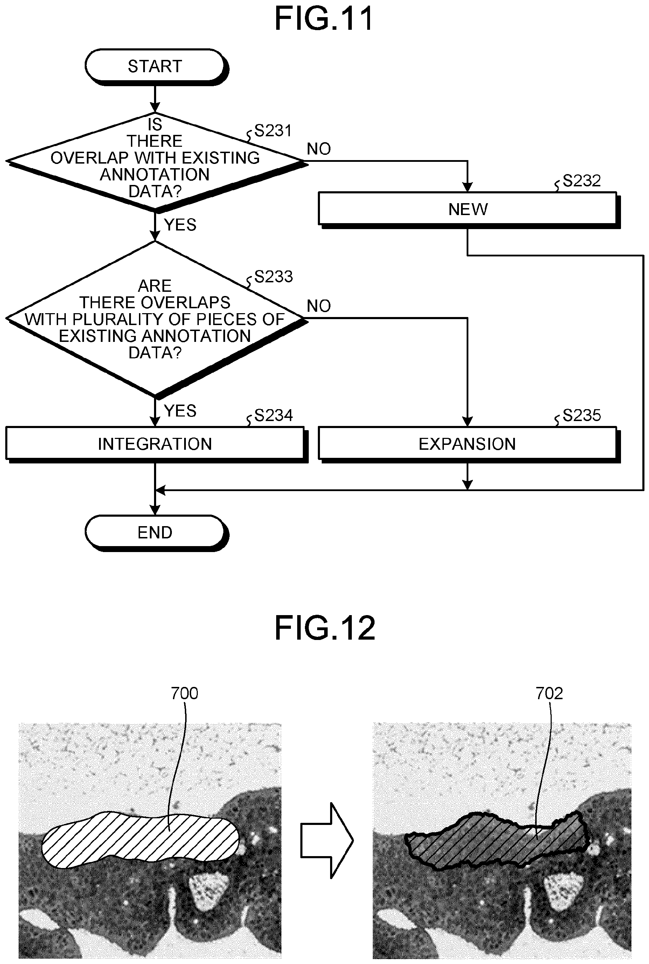

Specifically, in the present embodiment, for example, in the addition mode (a first range setting mode), in the case where the decision section 106 has decided that the filled range (first region) 700 specified by the filling input operation and other existing annotation data (a region related to other image data for learning) 710 do not overlap, a new mode is decided on as the sub-mode (see FIG. 11). Further, for example, in the addition mode, in the case where the decision section 106 has decided that the filled range 700 and other existing annotation data 710 overlap, an integration mode or an expansion mode is decided on as the sub-mode (see FIG. 11).

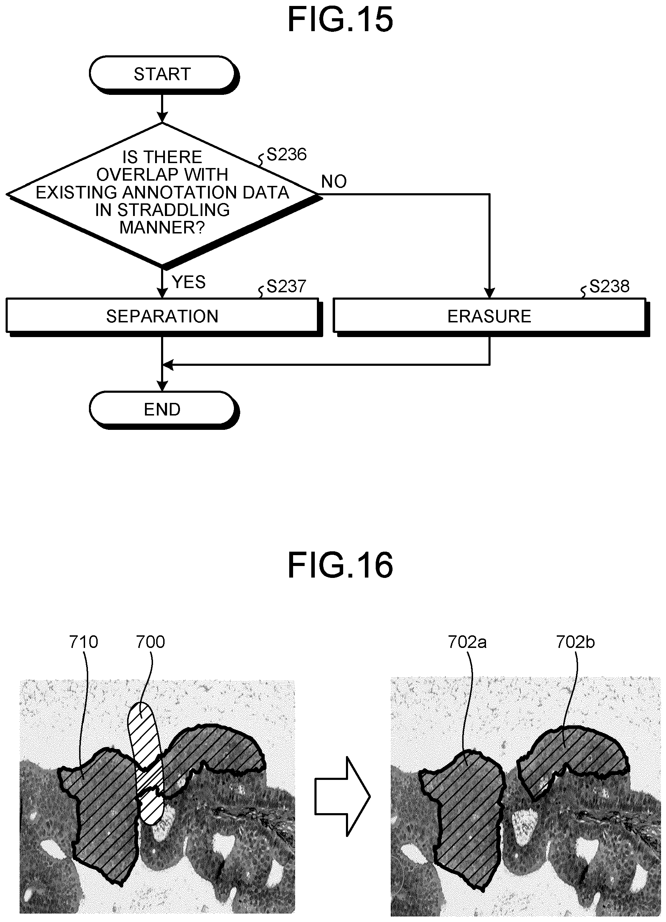

Further, in the present embodiment, for example, in the correction mode (a second range setting mode), in the case where the decision section 106 has decided that the filled range 700 overlaps with other existing annotation data 710 in a straddling manner, a separation mode is decided on as the sub-mode (see FIG. 15). Further, for example, in the correction mode (the second range setting mode), in the case where the decision section 106 has decided that the filled range 700 does not overlap with other existing annotation data 710 in a straddling manner, an erasure mode is decided on as the sub-mode (see FIG. 15). Details of step S230 will be described later.

Next, the information processing apparatus 10 determines the fitting range on the basis of the sub-mode decided on in step S230 described above, and performs fitting processing on the basis of a fitting technique set in advance (step S240). Specifically, the information processing apparatus 10 performs energy (cost) calculation by using graph cuts on the basis of the pathological image 610 and the boundary line of the filled range 700 specified by the filling input operation, and corrects (fits) the boundary line mentioned above on the basis of the calculation result; thereby, acquires a new outline. Then, on the basis of the newly acquired outline, the information processing apparatus 10 acquires a target region (second region) 702 corresponding to an image that can be included in new annotation data 710.

In the present embodiment, for example, in the new mode, the fitting range is determined in such a manner as to execute fitting on the entire boundary line of the filled range 700 specified by the filling input operation. Further, for example, in the integration mode and the expansion mode, within the filled range 700, the fitting range is determined so as to execute fitting on the boundary line of the region not overlapping with other existing annotation data 710. In this case, the region related to the outline of the range on which fitting has been newly executed and the other existing annotation data 710 are integrated to become a target region (second region) 702 corresponding to an image that can be included in new annotation data 710. Further, for example, in the separation mode and the erasure mode, within the filled range 700, the fitting range is determined so as to execute fitting on the boundary line of the region overlapping with other existing annotation data 710. In this case, the information processing apparatus 10 removes, from the other existing annotation data 710, the region related to the outline of the range on which fitting has been newly executed, and thereby become a target region (second region) 702 corresponding to an image that can be included in new annotation data 710.

The information processing apparatus 10 displays the target region (second region) 702 obtained by fitting in step S240 described above to the user via the display apparatus 20, and urges the user to perform visual observation (step S250). In the present embodiment, the procedure may return to step S220 in accordance with the result of the user's observation. Then, the information processing apparatus 10 associates together an image of the target region 702 and an annotation attached to the target region 702 by the user, and thereby generates new annotation data 710.

The information processing apparatus 10 decides whether the generation of annotation data 710 can be ended or not (step S260). The information processing apparatus 10 ends the processing in the case where the annotation can be ended (step S260: Yes), or returns to step S210 described above in the case where the annotation cannot be ended (step S260: No).

Next, details of step S230 are described for each of the addition mode and the correction mode. First, details of step S230 in the addition mode are described with reference to FIG. 11 to FIG. 14. FIG. 11 is a sub-flowchart of step S230 illustrated in FIG. 8, and FIG. 12 to FIG. 14 are explanatory diagrams describing sub-modes according to the present embodiment. Specifically, as illustrated in FIG. 11, step S230 in the addition mode includes sub-step S231 to sub-step S235. Details of these sub-steps will now be described.

First, the information processing apparatus 10 decides whether the filled range (first region) 700 specified by the filling input operation on the pathological image 610 by the user and existing annotation data 710 overlap or not (sub-step S231). In the case where the filled range 700 and the other existing annotation data 710 overlap (sub-step S231: Yes), the information processing apparatus 10 proceeds to sub-step S233. On the other hand, in the case where the filled range 700 and the other existing annotation data 710 do not overlap (sub-step S231: No), the information processing apparatus 10 proceeds to sub-step S232.

The information processing apparatus 10 determines the fitting range in such a manner as to execute fitting on the entire boundary line of the filled range 700 (the new mode) (sub-step S232). Next, for example, as illustrated in FIG. 12, the information processing apparatus 10 performs fitting on the entire boundary line of the filled range 700, and acquires a new outline. Then, on the basis of the newly acquired outline, the information processing apparatus 10 acquires a target region (second region) 702 corresponding to an image that can be included in new annotation data 710.

Next, the information processing apparatus 10 decides whether or not the filled range 700 and a plurality of pieces of other existing annotation data 710 overlap (sub-step S233). In the case where the filled range 700 and the plurality of pieces of other existing annotation data 710 overlap (sub-step S233: Yes), the information processing apparatus 10 proceeds to sub-step S234. On the other hand, in the case where the filled range 700 and the plurality of pieces of other existing annotation data 710 do not overlap (sub-step S233: No), the information processing apparatus 10 proceeds to sub-step S235.

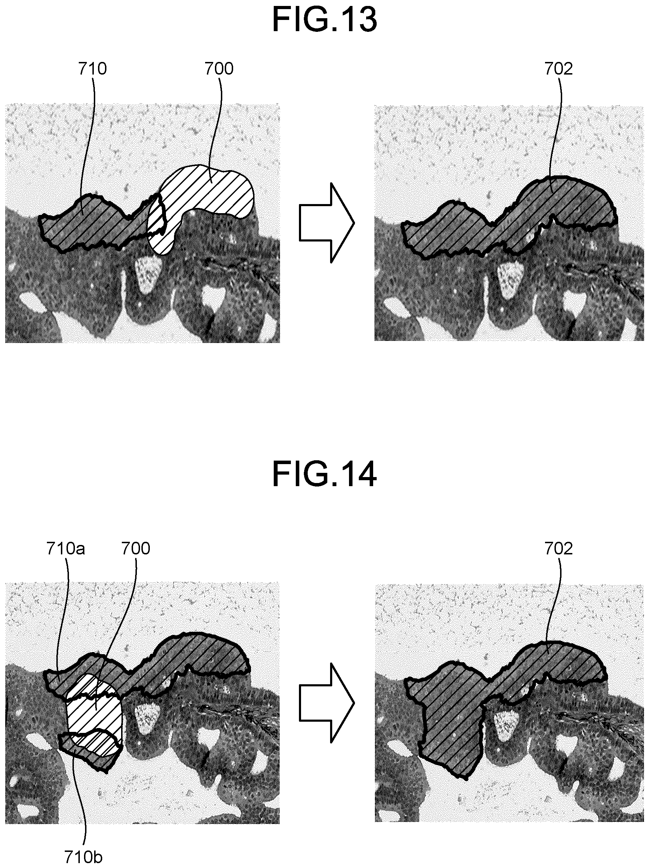

The information processing apparatus 10 determines the fitting range within the filled range 700, so as to execute fitting on the boundary line of the region not overlapping with any of the pieces of other existing annotation data 710 (the integration mode) (sub-step S234). Then, the information processing apparatus 10 performs fitting in the fitting range mentioned above, and acquires a new outline. Then, on the basis of the newly acquired outline, for example, as illustrated in FIG. 14, the information processing apparatus 10 integrates the region related to the outline of the range on which fitting has been newly executed and a plurality of pieces of other existing annotation data 710a and 710b, and acquires a target region (second region) 702.

The information processing apparatus 10 determines the fitting range within the filled range 700, so as to execute fitting on the boundary line of the region not overlapping with the other existing annotation data 710 (the expansion mode) (sub-step S235). Next, the information processing apparatus 10 performs fitting in the fitting range mentioned above, and acquires a new outline. Then, on the basis of the newly acquired outline, for example, as illustrated in FIG. 13, the information processing apparatus 10 expands the other existing annotation data 710 by the region related to the outline of the range on which fitting has been newly executed, and acquires a target region (second region) 702.

Next, details of step S230 in the correction mode are described with reference to FIG. 15 to FIG. 17. FIG. 15 is a sub-flowchart of step S230 illustrated in FIG. 8, and FIG. 16 and FIG. 17 are explanatory diagrams describing sub-modes according to the present embodiment. Specifically, as illustrated in FIG. 15, step S230 in the correction mode includes sub-step S236 to sub-step S238. Details of these sub-steps will now be described.

First, the information processing apparatus 10 decides whether the filled range (first region) 700 overlaps with other existing annotation data 710 in a straddling manner or not (whether the filled range 700 overlaps in such a manner as to extend from one end to another end of other existing annotation data 710 or not) (sub-step S236). In the case where the filled range (first region) 700 overlap with the other existing annotation data 710 in a straddling manner (sub-step S236: Yes), the information processing apparatus 10 proceeds to sub-step S237. On the other hand, in the case where the filled range (first region) 700 does not overlap with the other existing annotation data 710 in a straddling manner (sub-step S236: No), the information processing apparatus 10 proceeds to sub-step S238.

The information processing apparatus 10 determines the fitting range within the filled range (first region) 700, so as to execute fitting on the boundary line of the region overlapping with the other existing annotation data 710 (the separation mode) (sub-step S237). Next, the information processing apparatus 10 performs fitting in the fitting range mentioned above, and acquires a new outline. Then, on the basis of the newly acquired outline, for example, as illustrated in FIG. 16, the information processing apparatus 10 removes, from the other existing annotation data 710, the region related to the outline of the range on which fitting has been newly executed, and thereby acquires target regions (second regions) 702a and 702b corresponding to images that can be included in new annotation data 710.

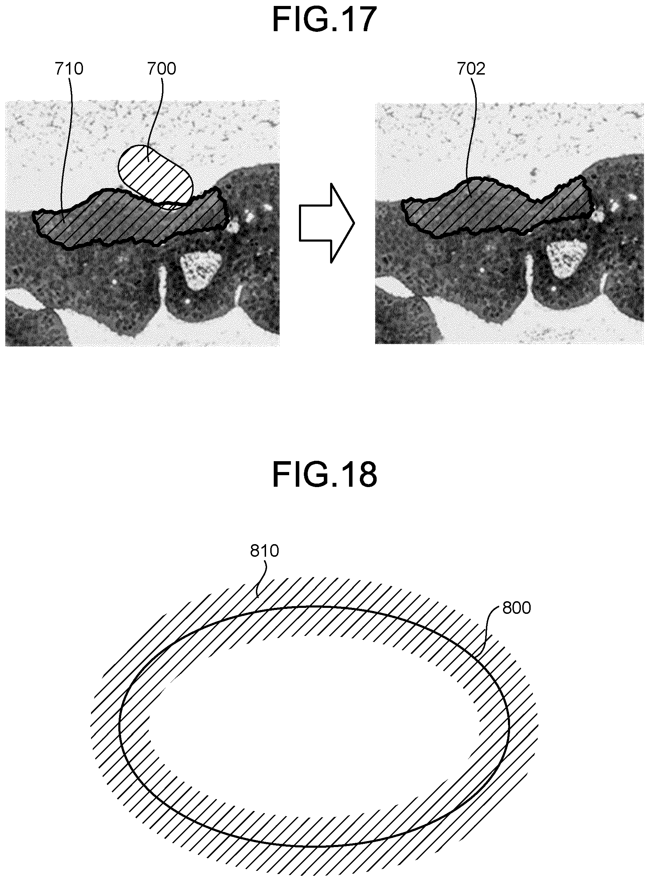

The information processing apparatus 10 determines the fitting range within the filled range (first region) 700, so as to execute fitting on the boundary line of the region overlapping with the other existing annotation data 710 (the erasure mode) (sub-step S238). Next, the information processing apparatus 10 performs fitting in the fitting range mentioned above, and acquires a new outline. Then, on the basis of the newly acquired outline, for example, as illustrated in FIG. 17, the information processing apparatus 10 removes (erases), from the other existing annotation data 710, the region related to the outline of the range on which fitting has been newly executed, and thereby acquires a target region (second region) 702 corresponding to an image that can be included in new annotation data 710.

Next, specific examples of the region of "search range" in which an outline is searched for at the time of fitting processing are described with reference to FIG. 18 to FIG. 20. FIG. 18 to FIG. 20 are explanatory diagrams describing search ranges according to the present embodiment.

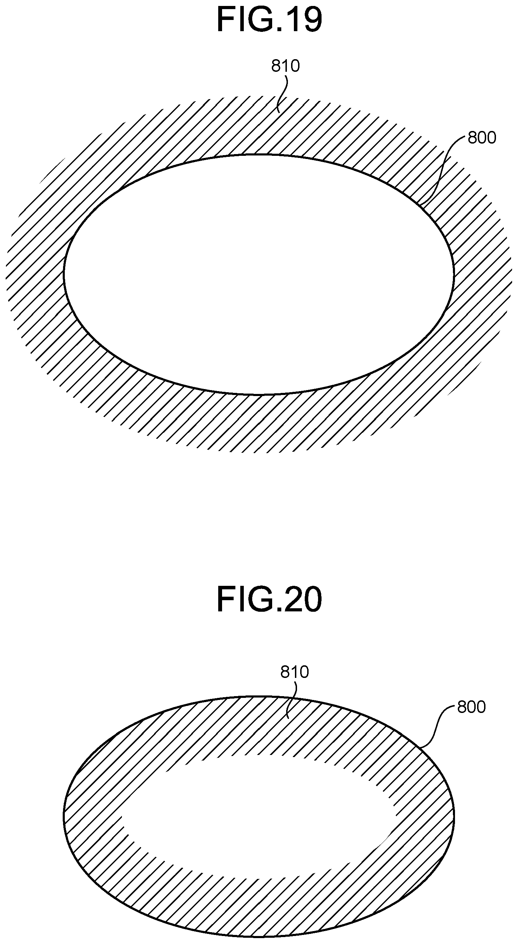

Specifically, for example, as illustrated in FIG. 18, the search range may be a range 810 located outside and inside a boundary line 800 of the filled range 700 (in FIG. 18, illustration is omitted) and extending predetermined distances along the normal direction from the boundary line 800. Alternatively, for example, as illustrated in FIG. 19, the search range may be a range 810 located outside the boundary line 800 of the filled range 700 (in FIG. 19, illustration is omitted) and extending a predetermined distance along the normal direction from the boundary line 800. Alternatively, for example, as illustrated in FIG. 20, the search range may be a range 810 located inside the boundary line 800 of the filled range 700 (in FIG. 20, illustration is omitted) and extending a predetermined distance along the normal direction from the boundary line 800.

As above, in the present embodiment, the range of the target region 702 can be specified by the user performing the filling input operation on the pathological image 610. Therefore, according to the present embodiment, even if the target region 702 has, for example, an intricately complicated shape like a cancer cell as illustrated in FIG. 9, by using the filling input operation, highly accurate annotation data can be generated while the user's labor is reduced as compared to the work of drawing a curve 704. As a result, according to the present embodiment, a large amount of highly accurate annotation data 710 can be efficiently generated.

### <<3. Modification example>>

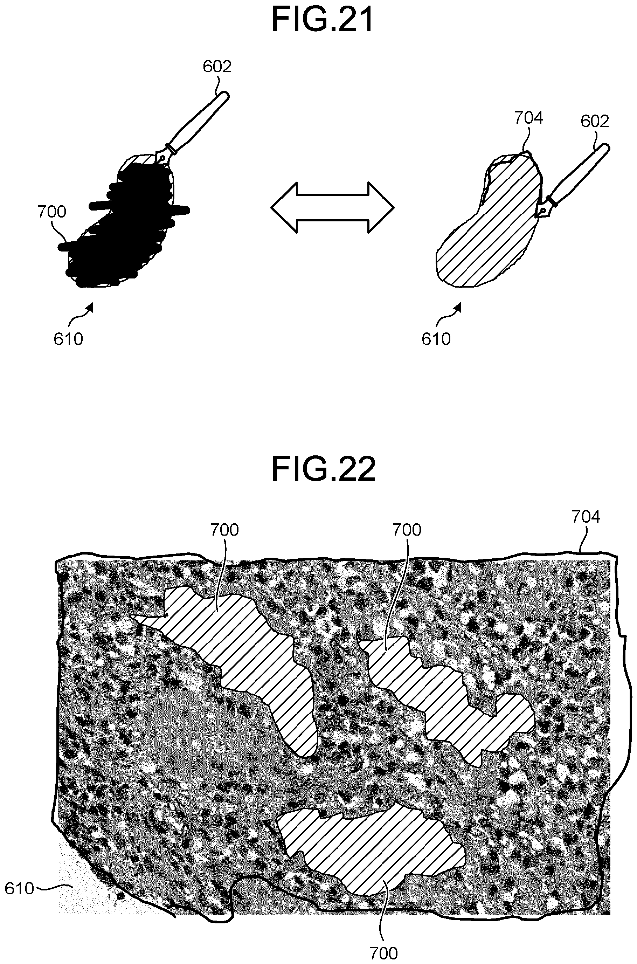

As described above, in the case where the target region 702 has an intricately complicated shape, the filling input operation, although it is an efficient method for specifying a range, has difficulty in inputting a detailed boundary line by using such a locus with a large width. Thus, if the filling input operation and the line-drawing input operation can be switched or the width of the locus can be changed in accordance with the shape of the target region 702, highly accurate annotation data can be generated while the user's labor is reduced more. Thus, in a modification example of an embodiment of the present disclosure described below, the width of the locus can be frequently changed, or the filling input operation and the line-drawing input operation can be switched. Hereinbelow, details of the present modification example are described with reference to FIG. 21 to FIG. 23. FIG. 21 to FIG. 23 are explanatory diagrams describing a modification example of an embodiment of the present disclosure.

In the present modification example, as illustrated on the left side of FIG. 21, the target region 702 can be specified by a filled range 700 that is obtained by performing the filling input operation on the pathological image 610. Further, in the present modification example, as illustrated on the right side of FIG. 21, the target region 702 can be specified also by a filled range 700 that is obtained by performing the line-drawing input operation of drawing a curve 704 on the pathological image 610. That is, in the present modification example, the filling input operation and the line-drawing input operation can be switched.

For example, in a pathological image 610 like that illustrated in FIG. 22, although a lesion site spreads as a whole, normal sites (in the drawing, the regions indicated by reference numeral 700) may be present in some places of the lesion site. Then, when it is intended to specify only the lesion site as the target region 702, first, the lesion site spreading as a whole is specified by drawing a curve 704 by the line-drawing input operation. Next, in order to exclude the normal sites (in the drawing, the regions indicated by reference numeral 700) present in some places of the lesion site from the range surrounded by the curve 704, the normal sites are filled and specified by the filling input operation in the correction mode. Thereby, a target region 702 excluding the normal sites from the range surrounded by the curve 704 can be specified. Then, when the filling input operation and the line-drawing input operation can be appropriately switched and used in this way, annotation data 710 having a lesion site as the target region 702 like that illustrated in FIG. 22 can be efficiently generated while the user's labor is reduced more.

Thus, in the present modification example, the user may switch between the filling input operation and the line-drawing input operation by performing a choosing operation on an icon or the like, or may switch to the line-drawing input operation when the user has set the width of the locus to less than a threshold.

However, frequent manual switching between the filling input operation and the line-drawing input operation is troublesome to the user, and hinders efficient generation of a large amount of annotation data.

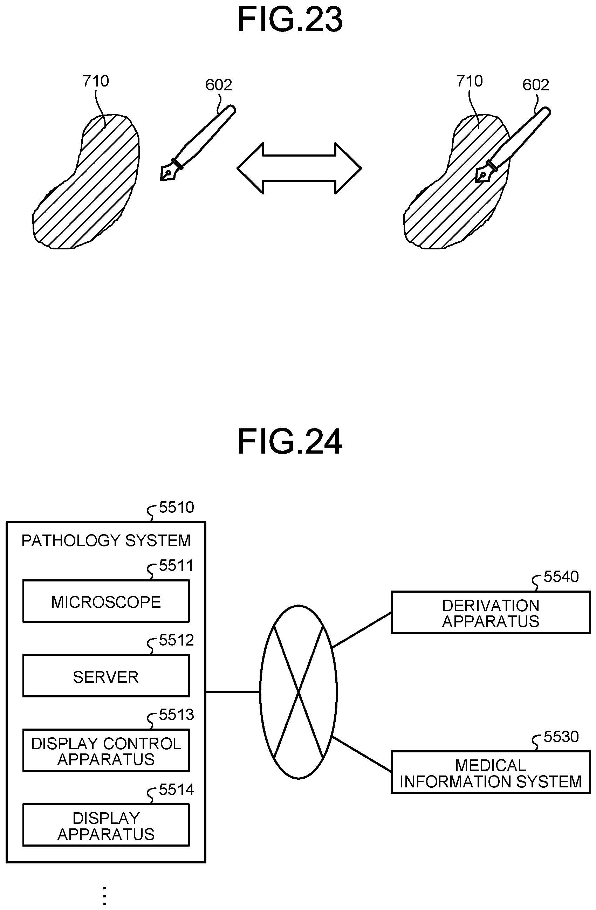

Thus, in the present modification example, the filling input operation and the line-drawing input operation may be switched on the basis of the input start position (the start point of the locus) of the filling input operation on the pathological image 610, for example, on the basis of the positional relationship of the input start position to existing annotation data (other image data for learning) 710. Specifically, as illustrated on the left side of FIG. 23, in the case where the input is started from near the outline of existing annotation data (other image data for learning) 710, the line-drawing input operation is set; on the other hand, as illustrated on the right side of FIG. 23, in the case where the input is started from the inside of existing annotation data 710, the filling input operation is set. In the present modification example, by automatically switching the input operation in this way, the convenience of the input operation can be enhanced more, and a large amount of highly accurate annotation data 710 can be efficiently generated. In the present modification example, also the width of the locus may be automatically adjusted on the basis of the positional relationship of the input start position to existing annotation data (other image data for learning) 710.

### <<4. Conclusions>>

As above, in the present embodiment, the range of the target region 702 can be specified by the user performing the filling input operation on the pathological image 610. Therefore, according to the present embodiment, even if the target region 702 has, for example, an intricately complicated shape like a cancer cell as illustrated in FIG. 9, by using the filling input operation, highly accurate annotation data can be generated while the user's labor is reduced as compared to the work of drawing a curve 704. As a result, according to the present embodiment, a large amount of highly accurate annotation data 710 can be efficiently generated.

In the embodiment of the present disclosure described above, the photographing target is not limited to a living tissue, and may be a subject having a fine structure, or the like; thus, is not particularly limited.

### <<5. Application example>>

The technology according to the present disclosure can be applied to various products. For example, the technology according to the present disclosure may be applied to a pathological diagnosis system with which a doctor or the like observes a cell or a tissue taken from a patient and diagnoses a lesion, a system for supporting the pathological diagnosis system, or the like (hereinafter, referred to as a diagnosis support system). The diagnosis support system may be a WSI (whole slide imaging) system that diagnoses a lesion on the basis of an image acquired by using digital pathology technology or supports the diagnosis.

FIG. 24 is a diagram illustrating an example of a schematic configuration of a diagnosis support system 5500 to which the technology according to the present disclosure is applied. As illustrated in FIG. 24, the diagnosis support system 5500 includes one or more pathology systems 5510. Further, a medical information system 5530 and a derivation apparatus 5540 may be included.

Each of the one or more pathology systems 5510 is a system mainly for use by a pathologist, and is introduced into, for example, a laboratory or a hospital. The pathology systems 5510 may be introduced into mutually different hospitals, and each is connected to the medical information system 5530 and the derivation apparatus 5540 via any of various networks such as a WAN (wide area network) (including the Internet), a LAN (local area network), a public line network, and a mobile communication network.

Each pathology system 5510 includes a microscope (specifically, a microscope used in combination with digital imaging technology) 5511, a server 5512, a display control apparatus 5513, and a display apparatus 5514.

The microscope 5511 has a function of an optical microscope; and photographs an observation target placed on a glass slide, and acquires a pathological image that is a digital image. The observation target is, for example, a tissue or a cell taken from a patient, and may be a piece of an organ, saliva, blood, or the like. For example, the microscope 5511 functions as the scanner 30 illustrated in FIG. 1.

The server 5512 stores and saves a pathological image acquired by the microscope 5511 in a not-illustrated storage section. Upon accepting a viewing request from the display control apparatus 5513, the server 5512 searches the not-illustrated storage section for a pathological image, and sends the found pathological image to the display control apparatus 5513. For example, the server 5512 functions as the information processing apparatus 10 according to an embodiment of the present disclosure.

The display control apparatus 5513 sends a request to view a pathological image accepted from the user to the server 5512. Then, the display control apparatus 5513 causes the display apparatus 5514, which uses liquid crystals, EL (electro-luminescence), a CRT (cathode ray tube), or the like, to display the pathological image accepted from the server 5512. The display apparatus 5514 may be compatible with 4K or 8K; further, is not limited to one display device, and may include a plurality of display devices.

Here, when the observation target is a solid substance such as a piece of an organ, the observation target may be, for example, a stained thin section. The thin section may be prepared by, for example, thinly slicing a block piece cut out from a specimen such as an organ. At the time of thin slicing, the block piece may be fixed with paraffin or the like.

For the staining of the thin section, various types of staining may be applied, such as general staining showing the form of a tissue, such as HE (hematoxylin-eosin) staining, or immunostaining or fluorescence immunostaining showing the immune state of a tissue, such as IHC (immunohistochemistry) staining. At this time, one thin section may be stained by using a plurality of different reagents, or two or more thin sections (also referred to as adjacent thin sections) continuously cut out from the same block piece may be stained by using mutually different reagents.

The microscope 5511 may include a low-resolution photographing section for photographing at low resolution and a high-resolution photographing section for photographing at high resolution. The low-resolution photographing section and the high-resolution photographing section may be different optical systems, or may be the same optical system. In the case where they are the same optical system, the resolution of the microscope 5511 may be changed in accordance with the photographing target.

The glass slide on which an observation target is placed is mounted on a stage located within the angle of view of the microscope 5511. The microscope 5511 first uses the low-resolution photographing section to acquire the entire image within the angle of view, and specifies the region of the observation target from the acquired entire image. Subsequently, the microscope 5511 divides a region where the observation target is present into a plurality of divided regions of a predetermined size, and uses the high-resolution photographing section to sequentially photograph the divided regions; thus, acquires high-resolution images of the divided regions. In the switching of target divided regions, the stage may be moved or the photographing optical system may be moved, or both of them may be moved. Each divided region may overlap with an adjacent divided region in order to prevent the occurrence of a photographing omission region due to unintended sliding of the glass slide, or the like. The entire image may include identification information for associating the entire image and the patient. The identification information may be, for example, a character string, a QR code (registered trademark), or the like.

High-resolution images acquired by the microscope 5511 are inputted to the server 5512. The server 5512 divides each high-resolution image into smaller-size partial images (hereinafter, referred to as tile images). For example, the server 5512 divides one high-resolution image into a total of 100 tile images of 10 × 10 in the vertical and horizontal directions. At this time, when adjacent divided regions overlap, the server 5512 may perform stitching processing on the adjacent high-resolution images by using a technique such as template matching. In this case, the server 5512 may generate tile images by dividing the entirety of a high-resolution image produced by bonding by stitching processing. However, the generation of tile images from a high-resolution image may be performed before the stitching processing mentioned above.

The server 5512 may further divide the tile image to generate tile images of a still smaller size. The generation of such tile images may be repeated until tile images of a size set as the minimum unit are generated.

Upon generating tile images of the minimum unit in this way, the server 5512 executes, on all the tile images, tile synthesis processing of synthesizing a predetermined number of adjacent tile images to generate one tile image. The tile synthesis processing may be repeated until one tile image is finally generated. By such processing, a tile image group of a pyramid structure in which each class is composed of one or more tile images is generated. In this pyramid structure, the number of pixels is equal between a tile image of a layer and a tile image of a layer different from the layer mentioned above, but the resolution is different. For example, when a total of four tile images of 2 × 2 are synthesized to generate one tile image of a higher layer, the resolution of the tile image of the higher layer is 1/2 times the resolution of the tile image of the lower layer used for synthesis.

By constructing such a tile image group of a pyramid structure, the degree of detail of the observation target displayed on the display apparatus can be switched in accordance with the class that the tile image to be displayed belongs to. For example, when a tile image of the lowest layer is used, a small region of the observation target can be displayed in detail; and when a tile image of a higher layer is used, a larger region of the observation target can be displayed more roughly.

The generated tile image group of a pyramid structure is, for example, stored in a not-illustrated storage section together with identification information (referred to as tile identification information) that can uniquely identify each tile image. Upon accepting a request to acquire a tile image including tile identification information from another apparatus (for example, the display control apparatus 5513 or the derivation apparatus 5540), the server 5512 transmits a tile image corresponding to the tile identification information to the other apparatus.

A tile image that is a pathological image may be generated for each photographing condition such as a focal length or a staining condition. In the case where a tile image is generated for each photographing condition, a specific pathological image and another pathological image that corresponds to a photographing condition different from a specific photographing condition and that is of the same region as the specific pathological image may be displayed side by side. The specific photographing condition may be specified by the viewer. When a plurality of photographing conditions are specified for the viewer, pathological images of the same region corresponding to the photographing conditions may be displayed side by side.

The server 5512 may store a tile image group of a pyramid structure in a storage apparatus other than the server 5512, for example, a cloud server or the like. Further, part or all of tile image generation processing like the above may be executed by a cloud server or the like.

The display control apparatus 5513 extracts a desired tile image from the tile image group of a pyramid structure in accordance with an input operation from the user, and outputs the tile image to the display apparatus 5514. By such processing, the user can obtain a feeling of observing the observation target while changing the observation magnification. That is, the display control apparatus 5513 functions as a virtual microscope. The virtual observation magnification herein corresponds to the resolution in practice.

Any method may be used as a method for capturing a high-resolution image. High-resolution images may be acquired by photographing divided regions while repeating the stopping and moving of the stage, or high-resolution images on strips may be acquired by photographing divided regions while performing movement on the stage at a predetermined speed. Further, the processing of generating tile images from a high-resolution image is not an essential constituent element; and also a method is possible in which the resolution of the entirety of a high-resolution image produced by bonding by stitching processing is changed in a stepwise manner and thereby images with resolutions changing in a stepwise manner are generated. Also in this case, a variety of images ranging from low-resolution images of large-area regions to high-resolution images of small areas can be presented to the user in a stepwise manner.

The medical information system 5530 is what is called an electronic medical record system, and stores information regarding diagnosis, such as information that identifies patients, patient disease information, examination information and image information used for diagnosis, diagnosis results, and prescription medicines. For example, a pathological image obtained by photographing an observation target of a patient can be temporarily stored via the server 5512, and then displayed on the display apparatus 5514 by the display control apparatus 5513. A pathologist using the pathology system 5510 performs pathological diagnosis on the basis of a pathological image displayed on the display apparatus 5514. The result of pathological diagnosis performed by the pathologist is stored in the medical information system 5530.

The derivation apparatus 5540 may execute analysis on a pathological image. For this analysis, a learning model created by machine learning may be used. The derivation apparatus 5540 may derive, as the analysis result, a result of classification of a specific region, a result of identification of a tissue, etc. Further, the derivation apparatus 5540 may derive identification results such as cell information, the number, the position, and luminance information, scoring information for the identification results, etc. These pieces of information derived by the derivation apparatus 5540 may be displayed on the display apparatus 5514 of the pathology system 5510 as diagnosis support information.

The derivation apparatus 5540 may be a server system composed of one or more servers (including a cloud server) or the like. Further, the derivation apparatus 5540 may be a configuration incorporated in, for example, the display control apparatus 5513 or the server 5512 in the pathology system 5510. That is, various analyses on a pathological image may be executed in the pathology system 5510.

The technology according to the present disclosure can, as described above, be suitably applied to the server 5512 among the configurations described above. Specifically, the technology according to the present disclosure can be suitably applied to image processing in the server 5512. By applying the technology according to the present disclosure to the server 5512, a clearer pathological image can be obtained, and therefore the diagnosis of a lesion can be performed more accurately.

The configuration described above can be applied not only to a diagnosis support system but also to all biological microscopes such as a confocal microscope, a fluorescence microscope, and a video microscope using digital imaging technology. Here, the observation target may be a biological sample such as a cultured cell, a fertilized egg, or a sperm, a biological material such as a cell sheet or a three-dimensional cell tissue, or a living body such as a zebrafish or a mouse. Further, the observation target may be observed not only in a state of being placed on a glass slide but also in a state of being preserved in a well plate, a laboratory dish, or the like.

Further, moving images may be generated from still images of an observation target acquired by using a microscope using digital imaging technology. For example, moving images may be generated from still images continuously captured for a predetermined period, or an image sequence may be generated from still images captured at predetermined intervals. By generating moving images from still images in this way, dynamic features of the observation target can be analyzed by using machine learning, such as movements such as pulsation, elongation, or migration of cancer cells, nerve cells, myocardial tissues, sperms, etc., or division processes of cultured cells or fertilized eggs.

The foregoing mainly describes, for example, the information processing system 1 including the information processing apparatus 10, the scanner 30, the learning apparatus 40, and the network 50. However, also an information processing system including some of them can be provided. For example, also an information processing system including some or all of the information processing apparatus 10, the scanner 30, and the learning apparatus 40 can be provided. At this time, the information processing system may not be a combination of whole apparatuses (a whole apparatus refers to a combination of hardware and software).

For example, also an information processing system including, among the information processing apparatus 10, the scanner 30, and the learning apparatus 40, a first apparatus (a combination of hardware and software) and software of a second apparatus can be provided. As an example, also an information processing system including the scanner 30 (a combination of hardware and software) and software of the information processing apparatus 10 can be provided. Thus, according to the embodiment of the present disclosure, also an information processing system including a plurality of configurations arbitrarily selected from among the information processing apparatus 10, the scanner 30, and the learning apparatus 40 can be provided.

### <<6. Hardware configuration>>

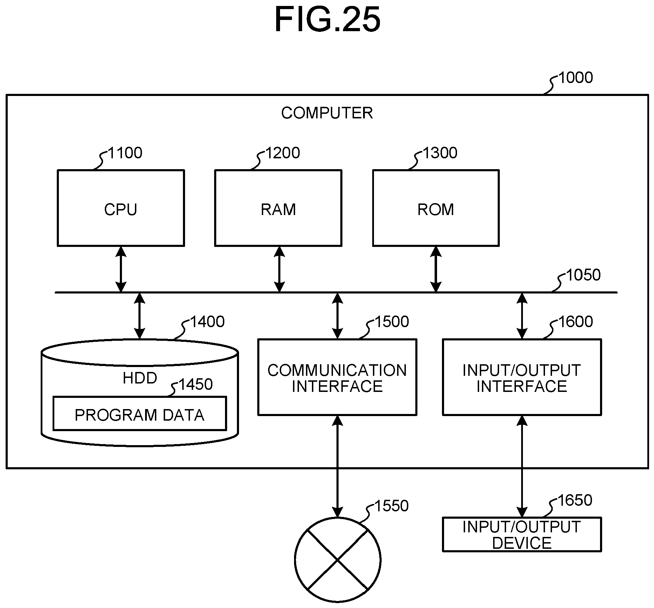

The information device such as the information processing apparatus 10 according to each embodiment described above is implemented by a computer 1000 having a configuration as illustrated in FIG. 25, for example. Hereinafter, the information processing apparatus 10 according to an embodiment of the present disclosure will be described as an example. FIG. 25 is a hardware configuration diagram illustrating an example of the computer 1000 that implements the functions of the information processing apparatus 10. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records an image processing program according to the present disclosure as an example of a program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a keyboard and a mouse via the input/output interface 1600. In addition, the CPU 1100 transmits data to an output device such as a display, a speaker, or a printer via the input/output interface 1600. Furthermore, the input/output interface 1600 may function as a media interface that reads a program or the like recorded on a computer-readable predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the information processing apparatus 10 according to the embodiment of the present disclosure, the CPU 1100 of the computer 1000 implements the functions of the processing section 100 and the like by executing the image processing program loaded on the RAM 1200. Furthermore, the HDD 1400 may store the information processing program according to the present disclosure and data in the storage section 130. Note that the CPU 1100 reads the program data 1450 from the HDD 1400 and executes the program data. However, as another example, the information processing program may be acquired from another device via the external network 1550.

Furthermore, the information processing apparatus 10 according to the present embodiment may be applied to a system including a plurality of devices on the premise of connection to a network (or communication between devices), such as cloud computing, for example. That is, the information processing apparatus 10 according to the present embodiment described above can be implemented as the information processing system 1 according to the present embodiment by a plurality of apparatuses, for example.

An example of the hardware configuration of the information processing apparatus 10 has been described above. Each of the above-described components may be configured using a general-purpose member, or may be configured by hardware specialized for the function of each component. Such a configuration can be appropriately changed according to the technical level at the time of implementation.

### <<7. Supplements>>

Note that the embodiment of the present disclosure described above can include, for example, an information processing method executed by the information processing apparatus or the information processing system as described above, a program for causing the information processing apparatus to function, and a non-transitory tangible medium in which the program is recorded. Further, the program may be distributed via a communication line (including wireless communication) such as the Internet.

Furthermore, each step in the information processing method according to the embodiment of the present disclosure described above may not necessarily be processed in the described order. For example, each step may be processed in an appropriately changed order. In addition, each step may be partially processed in parallel or individually instead of being processed in time series. Furthermore, the processing of each step does not necessarily have to be performed according to the described method, and may be performed by another method by another functional unit, for example.

The processes described in the above respective embodiments, the entirety or a part of the processes described as being automatically performed can be manually performed, or the entirety or a part of the processes described as being performed manually can be performed automatically using known methods. In addition, the details or information including processing procedures, specific names, various data, or various parameters indicated in the documents mentioned above and the drawings can be optionally modified unless otherwise specified. In one example, the various types of information illustrated in each figure are not limited to the illustrated information.

Further, the components of respective apparatuses or devices illustrated are functionally conceptual and do not necessarily have to be physically illustrated or configured. In other words, the specific form in which respective apparatuses or devices are distributed or integrated is not limited to the one illustrated in the figure, and their entirety or a part is functionally or physically distributed or integrated in any units depending on various loads or usage conditions.

Although the preferred embodiments of the present disclosure have been described in detail with reference to the accompanying drawings, the technical scope of the present disclosure is not limited to such examples. It is obvious that a person having ordinary knowledge in the technical field of the present disclosure can conceive various changes or modifications within the scope of the technical idea described in the claims, and it is naturally understood that these also belong to the technical scope of the present disclosure.

Further, the effects described in this specification are merely illustrative or exemplified effects and are not necessarily limitative. That is, with or in the place of the above effects, the technology according to the present disclosure may achieve other effects that are clear to those skilled in the art on the basis of the description of this specification.

Additionally, the technical scope of the present disclosure may also be configured as below.
(1) An information processing apparatus comprising:
   an information acquisition section that acquires information of a first region specified by a filling input operation on image data of a living tissue by a user; and
   a region determination section that executes fitting on a boundary of the first region on the basis of the image data and information of the first region and determines a second region to be subjected to predetermined processing.
(2) The information processing apparatus according to (1), further comprising:
   an extraction section that, on the basis of the second region, extracts, from the image data, image data for learning that is image data used for machine learning.
(3) The information processing apparatus according to (2), wherein the living tissue is a cell sample.
(4) The information processing apparatus according to (2) or (3), wherein the region determination section executes fitting based on a boundary between a foreground and a background, fitting based on a cell membrane, or fitting based on a cell nucleus.
(5) The information processing apparatus according to any one of (2) to (4), further comprising a decision section that decides whether the first region and a region related to other image data for learning overlap or not.
(6) The information processing apparatus according to (5), wherein the region determination section determines a fitting range where fitting is to be executed within a boundary of the first region on the basis of a decision result of the decision section, and executes the fitting in the fitting range.
(7) The information processing apparatus according to (6), wherein the region determination section determines the fitting range in accordance with a range setting mode.
(8) The information processing apparatus according to (7), wherein in a first range setting mode, in a case where the first region and the region related to the other image data for learning do not overlap, the region determination section executes the fitting on an entire boundary of the first region.
(9) The information processing apparatus according to (8), wherein in the first range setting mode, in a case where the first region and the region related to the other image data for learning overlap, the region determination section executes the fitting on a boundary of a region not overlapping with the region related to the other image data for learning, within the first region.
(10) The information processing apparatus according to (9), wherein the region determination section determines the second region by joining a portion of the first region related to a boundary of a range on which the fitting has been newly executed and the region related to the other image data for learning.
(11) The information processing apparatus according to any one of (7) to (10), wherein in a second range setting mode, in a case where the first region and the region related to the other image data for learning overlap, the region determination section executes the fitting on a boundary of a region overlapping with the region related to the other image data for learning, within the first region.
(12) The information processing apparatus according to (11), wherein the region determination section determines the second region by removing, from the region related to the other image data for learning, a portion of the first region related to a boundary of a range on which the fitting has been newly executed.
(13) The information processing apparatus according to any one of (2) to (12), wherein the region determination section executes the fitting on a boundary of the first region on the basis of image data of a region outside or inside the boundary of the first region.
(14) The information processing apparatus according to (2), wherein the region determination section executes the fitting on a boundary of the first region on the basis of image data of a region outside and inside an outline of the first region.
(15) The information processing apparatus according to any one of (2) to (4), wherein the filling input operation is an operation in which a part of the image data is filled by the user with a locus with a predetermined width that is superimposed and displayed on the image data.
(16) The information processing apparatus according to (15), further comprising: a locus width setting section that sets the predetermined width.
(17) The information processing apparatus according to (16), wherein the locus width setting section switches between a line-drawing input operation in which a locus having the predetermined width is drawn to be superimposed on the image data by the user and the filling input operation.
(18) The information processing apparatus according to (17), wherein in a case where the predetermined width is set to less than a threshold, switching to the line-drawing input operation is made.
(19) The information processing apparatus according to any one of (16) to (18), wherein the locus width setting section sets the predetermined width on the basis of an input by the user.
(20) The information processing apparatus according to any one of (16) to (18), wherein the locus width setting section sets the predetermined width on the basis of a result of analysis on the image data or a display magnification of the image data.
(21) The information processing apparatus according to any one of (16) to (18), wherein the locus width setting section sets the predetermined width on the basis of an input start position of an input operation on the image data.
(22) The information processing apparatus according to (21), wherein the locus width setting section sets the predetermined width on the basis of a positional relationship of the input start position to a region related to other image data for learning.
(23) The information processing apparatus according to (17), wherein
   the information acquisition section acquires information of a third region specified by the line-drawing input operation on the image data by the user, and
   the region determination section executes fitting on a boundary of the third region on the basis of the image data and information of the third region and determines the second region.
(24) An information processing method comprising a processor's:
   acquiring information of a first region specified by a filling input operation on image data of a living tissue by a user; and
   executing fitting on a boundary of the first region on the basis of the image data and information of the first region and determining a second region to be subjected to predetermined processing.
(25) A program that causes a computer to function as:
   an information acquisition section that acquires information of a first region specified by a filling input operation on image data of a living tissue by a user; and
   a region determination section that executes fitting on a boundary of the first region on the basis of the image data and information of the first region and determines a second region to be subjected to predetermined processing.
(26) An information processing system comprising:
   an information processing apparatus; and
   a program for causing the information processing apparatus to execute information processing,
   wherein the information processing apparatus functions as: in accordance with the program,
   an information acquisition section that acquires information of a first region specified by a filling input operation on image data of a living tissue by a user; and
   a region determination section that executes fitting on a boundary of the first region on the basis of the image data and information of the first region and determines a second region to be subjected to predetermined processing.

### Reference Signs List

- 1: INFORMATION PROCESSING SYSTEM
- 10: INFORMATION PROCESSING APPARATUS
- 20: DISPLAY APPARATUS
- 30: SCANNER
- 40: LEARNING APPARATUS
- 50: NETWORK
- 100: PROCESSING SECTION
- 102: LOCUS WIDTH SETTING SECTION
- 104: INFORMATION ACQUISITION SECTION
- 106: DECISION SECTION
- 108: REGION DETERMINATION SECTION
- 110: EXTRACTION SECTION
- 112: DISPLAY CONTROL SECTION
- 120: IMAGE DATA RECEPTION SECTION
- 130: STORAGE SECTION
- 140: OPERATION SECTION
- 150: TRANSMISSION SECTION
- 200: DISPLAY SECTION
- 600, 602: ICON
- 610: PATHOLOGICAL IMAGE
- 700: FILLED RANGE
- 702, 702a, 702b: TARGET REGION
- 704: CURVE
- 710, 710a, 710b: ANNOTATION DATA
- 800: BOUNDARY LINE
- 810: RANGE

## Claims

1. An information processing apparatus comprising:
an information acquisition section that acquires information of a first region specified by a filling input operation on image data of a living tissue by a user; and
a region determination section that executes fitting on a boundary of the first region on the basis of the image data and information of the first region and determines a second region to be subjected to predetermined processing.

2. The information processing apparatus according to claim 1, further comprising:
an extraction section that, on the basis of the second region, extracts, from the image data, image data for learning that is image data used for machine learning.

3. The information processing apparatus according to claim 2, wherein the living tissue is a cell sample.

4. The information processing apparatus according to claim 2, wherein the region determination section executes fitting based on a boundary between a foreground and a background, fitting based on a cell membrane, or fitting based on a cell nucleus.

5. The information processing apparatus according to claim 2, further comprising a decision section that decides whether the first region and a region related to other image data for learning overlap or not.

6. The information processing apparatus according to claim 5, wherein the region determination section determines a fitting range where fitting is to be executed within a boundary of the first region on the basis of a decision result of the decision section, and executes the fitting in the fitting range.

7. The information processing apparatus according to claim 6, wherein the region determination section determines the fitting range in accordance with a range setting mode.

8. The information processing apparatus according to claim 7, wherein in a first range setting mode, in a case where the first region and the region related to the other image data for learning do not overlap, the region determination section executes the fitting on an entire boundary of the first region.

9. The information processing apparatus according to claim 8, wherein in the first range setting mode, in a case where the first region and the region related to the other image data for learning overlap, the region determination section executes the fitting on a boundary of a region not overlapping with the region related to the other image data for learning, within the first region.

10. The information processing apparatus according to claim 9, wherein the region determination section determines the second region by joining a portion of the first region related to a boundary of a range on which the fitting has been newly executed and the region related to the other image data for learning.

11. The information processing apparatus according to claim 7, wherein in a second range setting mode, in a case where the first region and the region related to the other image data for learning overlap, the region determination section executes the fitting on a boundary of a region overlapping with the region related to the other image data for learning, within the first region.

12. The information processing apparatus according to claim 11, wherein the region determination section determines the second region by removing, from the region related to the other image data for learning, a portion of the first region related to a boundary of a range on which the fitting has been newly executed.

13. The information processing apparatus according to claim 2, wherein the region determination section executes the fitting on a boundary of the first region on the basis of image data of a region outside or inside the boundary of the first region.

14. The information processing apparatus according to claim 2, wherein the region determination section executes the fitting on a boundary of the first region on the basis of image data of a region outside and inside an outline of the first region.

15. The information processing apparatus according to claim 2, wherein the filling input operation is an operation in which a part of the image data is filled by the user with a locus with a predetermined width that is superimposed and displayed on the image data.

16. The information processing apparatus according to claim 15, further comprising: a locus width setting section that sets the predetermined width.

17. The information processing apparatus according to claim 16, wherein the locus width setting section switches between a line-drawing input operation in which a locus having the predetermined width is drawn to be superimposed on the image data by the user and the filling input operation.

18. The information processing apparatus according to claim 17, wherein in a case where the predetermined width is set to less than a threshold, switching to the line-drawing input operation is made.

19. The information processing apparatus according to claim 16, wherein the locus width setting section sets the predetermined width on the basis of an input by the user.

20. The information processing apparatus according to claim 16, wherein the locus width setting section sets the predetermined width on the basis of a result of analysis on the image data or a display magnification of the image data.

21. The information processing apparatus according to claim 16, wherein the locus width setting section sets the predetermined width on the basis of an input start position of an input operation on the image data.

22. The information processing apparatus according to claim 21, wherein the locus width setting section sets the predetermined width on the basis of a positional relationship of the input start position to a region related to other image data for learning.

23. The information processing apparatus according to claim 17, wherein
the information acquisition section acquires information of a third region specified by the line-drawing input operation on the image data by the user, and
the region determination section executes fitting on a boundary of the third region on the basis of the image data and information of the third region and determines the second region.

24. An information processing method comprising
a processor's:
acquiring information of a first region specified by a filling input operation on image data of a living tissue by a user; and
executing fitting on a boundary of the first region on the basis of the image data and information of the first region and determining a second region to be subjected to predetermined processing.

25. A program that causes a computer to function as:
an information acquisition section that acquires information of a first region specified by a filling input operation on image data of a living tissue by a user; and
a region determination section that executes fitting on a boundary of the first region on the basis of the image data and information of the first region and determines a second region to be subjected to predetermined processing.

26. An information processing system comprising:
an information processing apparatus; and
a program for causing the information processing apparatus to execute information processing,
wherein the information processing apparatus functions as: in accordance with the program,
an information acquisition section that acquires information of a first region specified by a filling input operation on image data of a living tissue by a user; and
a region determination section that executes fitting on a boundary of the first region on the basis of the image data and information of the first region and determines a second region to be subjected to predetermined processing.
